# EUROPÄISCHE PATENTSCHRIFT

(11) **EP 0 530 348 B1**
(45) Veröffentlichungstag und Bekanntmachung des Hinweises auf die Patenterteilung: **01.03.1995**
(21) Anmeldenummer: 92907480.5
(22) Anmeldetag: 23.03.1992
(51) Int. Cl.: F16B 13/02, F16B 19/00, E05D 5/02

(54) **KUNSTSTOFF-HALTEZAPFEN, INSBESONDERE FÜR MÖBELBESCHLÄGE**
PLASTIC MOUNTING PIN DESIGNED IN PARTICULAR FOR FURNITURE FITTINGS
TENON DE RETENUE EN PLASTIQUE, NOTAMMENT POUR FOURNITURES POUR MEUBLES

(30) Priorität: 27.03.1991 DE 4110079; 10.06.1991 DE 4119047
(43) Veröffentlichungstag der Anmeldung: 10.03.1993
(73) Patentinhaber: MEPLA-WERKE LAUTENSCHLÄGER GmbH & Co. KG, D-64354 Reinheim (DE)
(72) Erfinder: LAUTENSCHLÄGER, Horst, D-6107 Reinheim 1 (DE)
(74) Vertreter: Helber, Friedrich G., Dipl.-Ing.
(86) Internationale Anmeldenummer: EP9200637
(87) Internationale Veröffentlichungsnummer: WO9217706

(56) Entgegenhaltungen:
- EP-A- 0 387 391
- CH-A- 440 852
- DE-A- 1 475 039
- DE-A- 2 736 333
- DE-U- 8 807 139
- FR-A- 1 168 666

## Beschreibung

Die Erfindung betrifft eine Befestigungsanordnung eines dübelartigen Haltezapfens in einer zugehörigen Bohrung gemäß Oberbegriff des Anspruchs 1.

Eine solche Anordnung ist aus DE-B-2727 962 bekannt.

Mittels solcher Kunststoff-Haltezapfen werden beispielsweise Möbelbeschläge an den Wänden von Möbelstücken befestigt. Sofern es sich um im Spritzgußverfahren hergestellte Kunststoff-Beschläge oder Beschlagteile handelt, können die Haltezapfen direkt einstückig am Beschlag angespritzt sein (DE-OS 24 57 172; DE-OS 24 57 022), während sie zur Befestigung von metallischen Beschlägen gesondert hergestellt und mit den zu befestigenden Beschlägen verbunden, z.B. verschraubt sind (DE-AS 27 27 962). Die Haltezapfen werden in im Befestigungsbereich des Möbelstücks vorgesehene Bohrungen eingesetzt, wobei ein fester belastbarer Sitz z.B. dadurch gewährleistet wird, daß der Zapfendurchmesser mit Übermaß gegenüber dem Durchmesser der Befestigungsbohrung bemessen wird. Aufgrund der Eigenelastizität des verwendeten Kunststoffmaterials und/oder durch eine partielle Längsschlitzung können die Haltezapfen unter radialer Durchmesserverringerung in die zugehörige Befestigungsbohrung eingepreßt oder eingeschlagen werden. Durch auf ihrer Umfangsfläche vorgesehene umlaufende, im Querschnitt sägezahnförmige Ringvorsprünge wird ein den Einpreßwiderstand übersteigender Widerstand gegen Herausreißen der Haltezapfen erreicht, da die umlaufenden Haltegrate der Sägezahn-Ringvorsprünge bei solchen Ausreißbeanspruchungen die Tendenz haben, sich im Material der Bohrungswandung zu verhaken. Der erzielbare Widerstand gegen Herausreißen genügt aber in vielen Fällen den im Laufe der Zeit auftretenden Beanspruchungen nicht, zumal es gerade bei Holzmaterialien auch - z.B. durch Austrocknung oder Feuchtigkeitsaufnahme aus der Umgebungsatmosphäre - zu einer Änderung der Abmessungen der hölzernen Wandung des Möbelstücks und somit der Bohrung kommen kann. Bei hohen Beanspruchungen werden deshalb anstelle der vorstehend beschriebenen Einschlag- oder Einsteckzapfen auch Haltezapfen verwendet, die nach dem Einsetzen in die zugehörige Befestigungsbohrung durch einen gesonderten Spreizkörper aufspreizbar und deshalb - auch wenn sie kein oder nur ein geringes Übermaß gegenüber dem Durchmesser der Befestigungsbohrung haben, nach dem Einbringen in die Bohrung im Durchmesser vergrößerbar sind, so daß der erforderliche feste Sitz sichergestellt wird. Auch ein Nachspannen bei Lockerwerden infolge eines sich vergrößernden Durchmessers der Befestigungsbohrung aufgrund äußerer Einflüsse ist bei solchen spreizdübelartigen Haltezapfen möglich. Erkauft wird diese höhere Beanspruchbarkeit und Nachspannbarkeit allerdings durch einen komplexeren Aufbau und somit eine Verteuerung der Haltezapfen. Außerdem hängt die tatsächlich erzielte Festigkeit des Sitzes der Haltezapfen in den Befestigungsbohrungen auch von der bei der Montage individuell ausgeübten Spreizkraft ab. Für einen optimalen festen Sitz ohne Beschädigung der Bohrungswandung ist also auch eine gewisse Erfahrung des Montagepersonals erforderlich, die heute nicht mehr in allen Fällen vorausgesetzt werden kann.

Der Erfindung liegt demgegenüber die Aufgabe zugrunde, die bekannten, durch Übermaß in der Befestigungsbohrung gehaltenen Haltezapfen so weiterzubilden, daß sie einfach und schnell auch von ungeübtem Personal montiert werden können, wobei ein dauerhaft fester Sitz mit vergrößertem Ausreiß-Widerstand erreicht werden soll.

Erfindungsgemäß wird diese Aufgabe durch die kennzeichnenden Merkmale des Anspruchs 1 gelöst. Die, im Vergleich zu den an den bekannten Haltezapfen vorgesehenen, im Querschnitt sägezahnförmigen Haltegrate, mit wesentlich größerem Übermaß in bezug auf den Durchmesser der Befestigungsbohrung bemessenen Lamellen verformen sich beim Einpressen oder Einschlagen des Haltezapfens in die zugehörige Befestigungsbohrung im Sinne einer kugelkalottenförmigen Verwölbung, wobei in den Lamellen eine elastische Vorspannung gespeichert wird, welche deren Haltegrat radial nach außen, d.h. in das Material der Bohrungswandung drängt. Eine auf den montierten Haltezapfen ausgeübte, aus dem Bohrungsinnern herausgerichtete Ausziehkraft versucht, die verwölbten Lamellen wieder in den ursprünglichen ungespannten Zustand zurückzuverformen, wobei sich aber der Durchmesser der Lamellen vergrößert und diese sich zusätzlich in die Bohrungswandung eingraben. D.h. Zugkräfte, welche den erfindungsgemäßen Haltezapfen aus der Bohrung herauszuziehen suchen, führen zu einer von der Stärke der Kraft abhängigen Erhöhung des Auszieh-Widerstands des Haltezapfens.

Die die Ringvorsprünge bildenden Lamellen weisen den den zugeschärften Haltegrat bildenden Dreieckquerschnitt vorzugsweise nur im äußeren Randbereich auf, während sie im übrigen in unverformtem Zustand im wesentlichen ebenflächig ausgebildet sind.

Die zwischen jeweils zwei in Längsrichtung aufeinanderfolgenden Lamellen verbleibenden Abschnitte des Zapfenteils gehen zweckmäßig mit einer im Querschnitt konkav ausgerundeten Übergangsfläche in die jeweils anschließende Flachseite der benachbarten Lamelle über. Durch die Ausrundung wird die Entstehung von Kerbbeanspruchung im Übergangsbereich des Zapfenteils zu den Lamellen vermieden und so die Beanspruchbarkeit erhöht.

Darüber hinaus ist es zweckmäßig, die zwischen den aufeinanderfolgenden Lamellen verbleibenden Abschnitte in ihrer Festigkeit entsprechend den zu erwartenden Beanspruchungen zu bemessen. Da die Zugbeanspruchung in diesen Zapfenteil bei auftretenden Zugkräften von außen nach innen geringer wird, empfiehlt es sich also, die Abschnitte der Zapfenteile vom bohrungsmündungsseitigen zum bohrungsinneren Ende der Befestigungsbohrung hin schrittweise mit jeweils kleiner werdendem Durchmesser herzustellen.

Neben einem möglichst hohen Widerstand gegen Herausreißen aus der Befestigungsbohrung ist eine exakte Halterung des Haltezapfens rechtwinklig zur Längsmittelachse des Befestigungszapfen erforderlich, d.h. ein mittels der erfindungsgemäßen Haltezapfen auf einer Möbelwand befestigter Beschlagteil soll auch in der Ebene der Wandoberfläche starr gehalten sein. Dies kann in zweckmäßiger Weiterbildung der Erfindung dadurch sichergestellt werden, daß der über die oberste bohrungsmündungsseitig vorgesehene Lamelle vortretende Endabschnitt des Zapfenteils, der alsdann unmittelbar in den zu befestigenden Beschlagteil übergeht, einen im Vergleich zu den Durchmessern der übrigen Zapfenabschnitte vergrößerten Durchmesser hat, der nur geringfügig kleiner als der Durchmesser der zugehörigen Befestigungsbohrung ist. Die bohrungsmündungsseitig äußerste Lamelle des Haltezapfens wird also dadurch wesentlich steifer als die übrigen Lamellen, wodurch der Haltezapfen insgesamt in der zugehörigen Befestigungsbohrung zentriert wird.

Die an den bohrungsmündungsseitigen Zapfen-Endabschnitt anschließende Lamelle hat - zum Ausgleich ihrer verringerten elastischen Verformbarkeit - zweckmäßig ein im Vergleich zu den übrigen Lamellen des Haltezapfens verringertes Übermaß gegenüber dem Durchmesser der Befestigungsbohrung.

Wenn der erfindungsgemäße Haltezapfen für einen selbst aus Kunststoff hergestellten Bauteil bestimmt ist, ist der Zapfenteil zweckmäßig integral am Kunststoff-Bauteil angesetzt. Bei der Herstellung im Spritzgußverfahren wird der erfindungsgemäße Haltezapfen bzw. werden die Haltezapfen also bei der Herstellung des Kunststoff-Bauteils zugleich mit angespritzt.

Wenn der Haltezapfen andererseits zur Befestigung metallischer Bauteile vorgesehen ist und deshalb separat hergestellt werden muß, empfiehlt es sich, im Zapfenteil eine bohrungsmündungsseitig offen mündende mittige Längsbohrung vorzusehen, in welcher der Schaft eines Befestigungsbolzens, vorzugsweise der Gewindeschaft einer Befestigungsschraube, verankerbar ist.

Die Längsbohrung wird dabei zweckmäßig so ausgebildet, daß sie sich vom offenen bohrungsmündungsseitigen Ende in Richtung zum bohrungsmündungsabgewandten Ende leicht konisch verjüngt, so daß sich eine in sie eingeschraubte Befestigungsschraube mit zunehmender Einschraubtiefe immer tiefer werdende Gewindegänge selbst in den Zapfenteil eingräbt.

Bei der Befestigung des Haltezapfens an einem Beschlagteil durch eine solche Schraube läßt sich diese Schraube also nach dem Einführen in die Längsbohrung zunächst mit geringer Einschraubkraft drehen, die dann mit zunehmender Einschraubtiefe größer wird. Die Verschraubung der erfindungsgemäßen Haltezapfen mit dem zu befestigenden Bauteil hat außerdem den Vorteil, daß der befestigte Bauteil durch Herausdrehen der Schrauben aus den Haltezapfen vom Untergrund abgenommen werden kann, wobei die Haltezapfen selbst dann in den zugehörigen Befestigungsbohrungen verbleiben.

Die zur Aufnahme solcher Befestigungsschrauben bestimmte Längsmittelbohrung kann entweder als vor der bohrungsmündungsabgewandten Stirnfläche des Zapfenteils endende Sackbohrung ausgebildet sein, oder sie kann den Zapfenteil auch ganz durchsetzen.

Auch dann, wenn der Zapfenteil integral an einem Kunststoff-Bauteil angesetzt ist, kann es zweckmäßig sein, eine Längsbohrung im Zapfenteil und dem Kunststoff-Bauteil vorzusehen, welche zumindest auf der zapfenteilabgewandten Seite des Kunststoff-Bauteils offen mündet, so daß der Schaft einer Halteschraube in sie einschraubbar oder ein Paß- bzw. Kerbstift in sie einschlag- oder einpressbar ist. Diese Halteschraube hat nicht etwa die Funktion einer Spreizschraube, sondern dient der belastbaren Verbindung des Zapfenteils mit dem Kunststoff-Bauteil, so daß dieses also auch dann noch fest mit einem Montageuntergrund verbunden bleibt, wenn der Zapfenteil sich -beispielsweise infolge mehrfacher Montage und Demontage - vom Kunststoff-Bauteil getrennt haben sollte.

Die Längsbohrung wird mit Vorteil mündungsseitig angesenkt, so daß der Kopf der Halteschraube die Oberseite des Kunststoff-Bauteils nicht überragt.

Die Erfindung ist in der folgenden Beschreibung dreier Ausführungsbeispiele in Verbindung mit der Zeichnung näher erläutert, und zwar zeigt:
- Fig. 1: die Seitenansicht eines einstückig an einem Beschlagteil angespritzten, in der erfindungsgemäßen Weise ausgebildeten Haltezapfens;
- Fig. 2: den in Fig. 1 gezeigten Haltezapfen im Längsmittelschnitt in der Einbaustellung in einer Befestigungsbohrung in der Wandung eines Möbelstücks;
- Fig. 3: eine Schnittansicht eines mit einem Beschlagteil verschraubten zweiten Ausführungsbeispiel eines erfindungsgemäßen Haltezapfens;
- Fig. 4: den in Fig. 3 gezeigten Haltezapfen in der bestimmungsgemäßen Montagestellung in einer zugeordneten Befestigungsbohrung;
- Fig. 5: eine Schnittansicht eines dritten Ausführungsbeispiels einstückig an einem Beschlagteil angespritzten erfindungsgemäßen Haltezapfens; und
- Fig. 6: den in Fig.5 gezeigten Haltezapfen in der Einbaustellung in einer Befestigungsbohrung in der Wandung eines Möbelstücks.

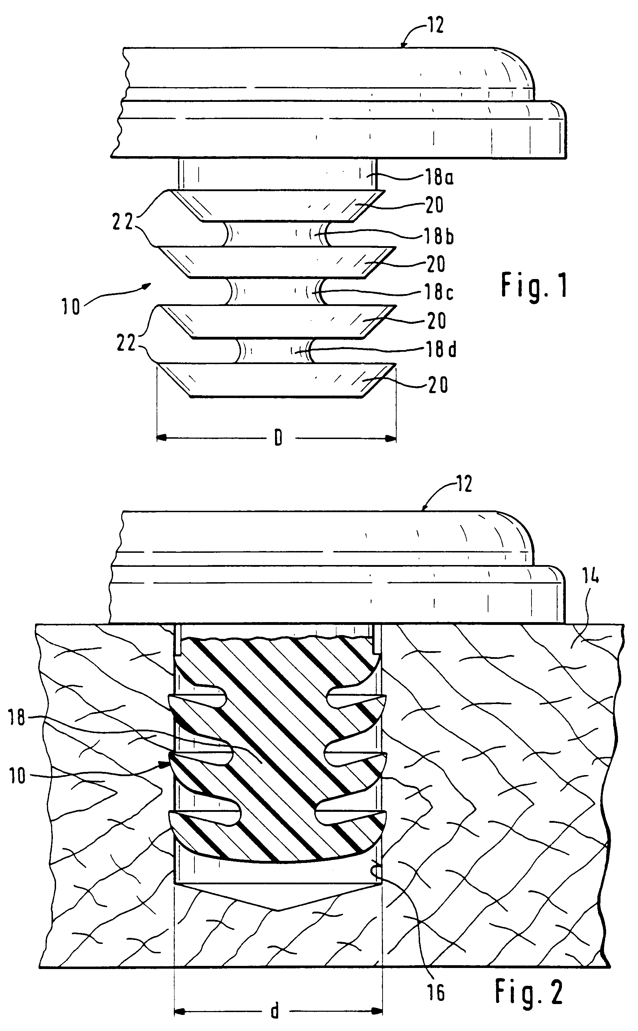

In den Figuren 1 und 2 ist ein erstes Ausführungsbeispiel eines insgesamt mit 10 bezeichneten erfindungsgemäßen Haltezapfens gezeigt, welcher einstückig an einem Möbelbeschlagteil 12 aus thermoplastichem Kunststoff angespritzt sein möge. Der Möbelbeschlagteil 12, von dem in den Zeichnungsfiguren nur ein den Haltezapfen 10 tragender Teilabschnitt gezeigt ist, kann beispielsweise eine Montageplatte bzw. der Unterteil einer Montageplatte oder auch ein Scharniertopf oder Befestigungsteil eines Scharniertopfs eines Möbelscharniers sein.

Der Haltezapfen 10 ist im dargestellten Fall für die Befestigung des Möbelbeschlagteils 12 auf der Oberfläche einer Möbelwand 14 vorgesehen, wofür die Wand 14 mit einer als Sackbohrung ausgebildeten Befestigungsbohrung 16 versehen ist. Der in der Bohrung 16 zu verankernde Haltezapfen 10 weist einen von der der Oberfläche der Möbelwand 14 gegenüberliegenden Unterseite des Möbelbeschlagteils 12 vortretenden langgestreckten Zapfenteil 18, von dessen Umfangsfläche eine Anzahl von in Längsrichtung zueinander versetzten ringscheibenförmigen, im wesentlichen ebenflächigen Lamellen 20 vorspringen, die lediglich in ihrem äußersten Randbereich in einen schneidenartigen Haltegrat 22 auslaufen, dessen zur Wandung der Befestigungsbohrung 16 weisende Schneide schräg nach außen zur Befestigungsfläche des Möbelbeschlagteils 12 gerichtet ist. Der Durchmesser des Zapfenteils 18 ist dabei - bis auf den unmittelbar an dem Beschlagteil 12 anschließenden Teilabschnitt 18a - wesentlich geringer als der Durchmesser d der Befestigungsbohrung 16, während der über die Haltegrate 22 der Lamellen 20 gemessene Durchmesser D größer als der Durchmesser d der Befestigungsbohrung ist. Infolge des relativ großen Durchmesserunterschiedes zwischen den Durchmessern der Zapfenteil-Abschnitte 18b, 18c und 18d sind die diese Abschnitte trennenden Lamellen nicht starr, sondern können bei Einpressen in die Befestigungsbohrung 16 sich - in der in Fig. 2 erkennbaren Weise - unter Verringerung des Durchmessers D kugelkalottenförmig verwölben. Die in den verwölbten Lamellen 20 gespeicherte Federkraft sucht die Lamellen 20 wieder in den ebenen Ausgangszustand zurückzuführen. Dabei legen sich die Haltegrate 22 unter Spannung an der Wandung der Befestigungsbohrung 16 an bzw. graben sich sogar etwas in das Material der Möbelwand 14 ein. Der Versuch, den Möbelbeschlagteil 12 mit Gewalt von der Möbelwand 14 abzunehmen, erhöht die radiale Spannung in den Lamellen, welche sich dadurch also zusätzlich in die Bohrungswandung eingraben.

Zur Vergleichmäßigung der in den Abschnitten 18b bis 18d des Zapfenteils 18 wirkenden axialen Beanspruchung sind die Durchmesser der Zapfenteil-Abschnitte in dem Sinne gestuft, daß sie vom Möbelbeschlagteil aus in Richtung zum freien Ende des Haltezapfens stufenweise kleiner werden. Außerdem ist in den Zeichnungsfiguren erkennbar, daß die Zapfenteile 18b bis 18d jeweils konkav ausgerundet in die anschließenden Lamellen übergehen, um so die Entstehung von Kerbbeanspruchung bei einwirkenden Längskräften zu minimieren.

Der früher erwähnte zwischen der obersten Lamelle 20 und dem Beschlagteil 12 vorgesehene Abschnitt 18a des Zapfenteils weist dagegen einen Durchmesser auf, der nur geringfügig kleiner als der Durchmesser d der Befestigungsbohrung 16 ist. Dementsprechend ist auch die an ihn anschließende oberste Lamelle deutlich steifer als die übrigen Lamellen 20, da sie über einen größeren Bereich ihrer dem Möbelbeschlagteil zugewandten Flächen vom Abschnitt 18a abgestützt und versteift wird. Aufgrund der größeren Steifigkeit, d.h. geringeren Verformbarkeit, dieser obersten, beschlagteilnahen Lamelle 20 ist es auch zweckmäßig, deren Durchmesser etwas geringer als den Durchmesser D der übrigen Lamellen 20, jedoch noch geringfügig größer als den Durchmesser d der Befestigungsbohrung 16 zu bemessen.

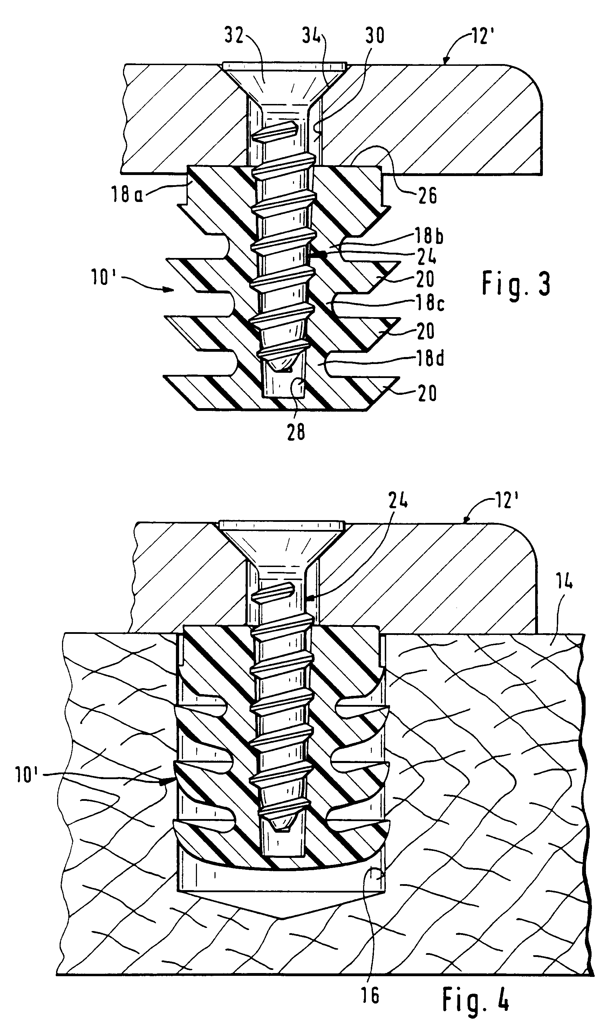

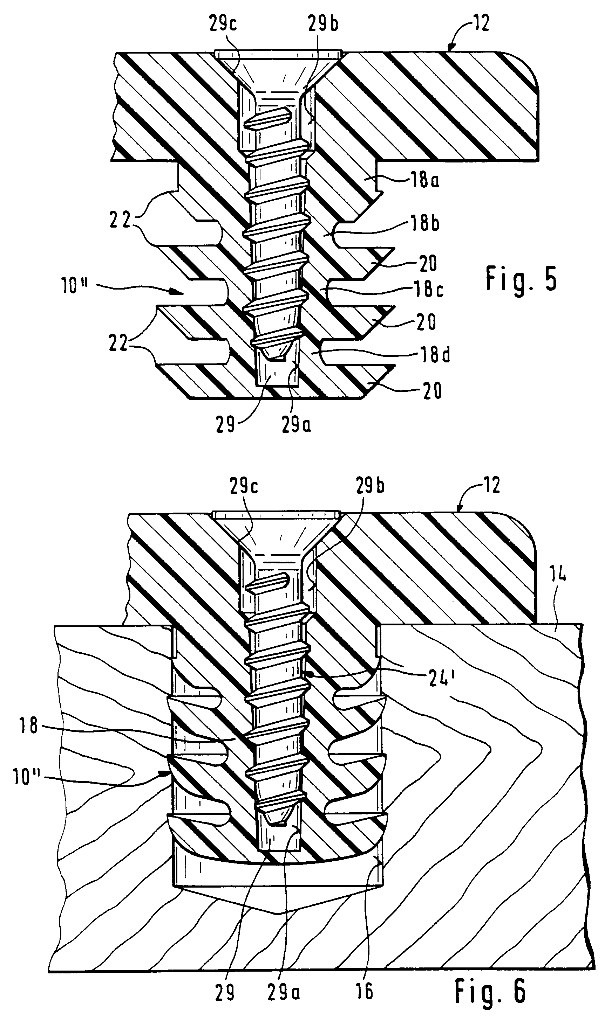

In den Figuren 3 und 4 ist ein Ausführungsbeispiel des Haltezapfens 10' gezeigt, welcher im grundsätzlichen Aufbau und der Ausgestaltung dem vorstehend in Verbindung mit den Fig. 1 und 2 beschriebenen Haltezapfen 10 entspricht, sich von diesem nur dadurch unterscheidet, daß er nicht einstückig am zugehörigen Beschlagteil 12' angesetzt, sondern separat hergestellt und mit dem Beschlagteil 12' durch eine Befestigungsschraube 24 verbunden ist. Zur Vermeidung unnötiger Wiederholungen werden deshalb nachstehend nur die sich aufgrund der gesonderten Herstellung und Verbindung des Haltezapfens 10' mit dem Beschlagteil 12 ergebenen Abwandlungen beschrieben, während es im übrigen genügt, auf die vorausgehende Beschreibung zu den Fig. 1 und 2 zu verweisen, zumal gleichen Teilen des Haltezapfens 10' in den Fig. 3 und 4 die gleichen Bezugszeichen wie den entsprechenden Teilen des Haltezapfens 10 zugeordnet sind.

Beim Haltezapfen 10' ist der Abschnitt 18a des Zapfenteils 18 an seinem oberen Ende mit einer ebenen Anlage- bzw. Befestigungsfläche 26 versehen, welche an der Unterseite des zugeordneten Beschlagteils 12' anliegt. Eine beschlagteilseitig offen mündende mittige Längsbohrung 28 nimmt dabei den Gewindeschaft der Befestigungsschraube 24 auf, welche durch eine Befestigungsbohrung 30 im Beschlagteil 12' hindurchgreift und mit ihrem - in der Zeichnung als Senkkopf 32 dargestellten - Kopf in einer Ansenkung 34 des Beschlagteils 12' abgestützt ist.

Die Längsbohrung 28 verjüngt sich von ihrem beschlagteilseitigen Ende aus leicht konisch. Im dargestellten Fall ist die Bohrung 28 als Sackbohrung ausgebildet, d.h. am stirnseitigen Ende des Haltezapfens verschlossen. Wenn in Sonderfällen die den Haltezapfen 10' mit dem Beschlagteil 12' verbindende Befestigungsschraube 24 so weit verlängert werden soll, daß sie zusätzlich in das Material der Möbelwand 14 eingreift, kann der Haltezapfen 10' auch mit einer durchgehenden Längsmittelbohrung 28 hergestellt werden.

Das in den Figuren 5 und 6 gezeigte dritte Ausfürungsbeispiel 10'' eines erfindungsgemäßen Haltezapfens scheint auf den ersten Blick lediglich die beim vorstehend erläuterten Ausführungsbeispiel beschriebene Ausgestaltung mit einer Befestigungsschraube 24 auf das in Verbindung mit dem in den Figuren 1 und 2 beschriebene Ausführungsbeispiel zu übertragen.Tatsächlich dient die beim dritten Ausführungsbeispiel anstelle der Befestigungsschraube 24 vorgesehene Halteschraube 24' aber als Abreiß- bzw. Abschersicherung für den Zapfenteil 18 vom Kunststoff-Beschlagteil 12 , d. h.sie stellt eine zusätzliche Metallarmierung des Haltezapfens dar, die beispielsweise beim Transport auftretende Stöße oder Schläge aufnimmt, welche ohne eine solche Armierung zum Abreißen bzw. Abscheren des Haltezapfens führen würden. Außerdem kann die Halteschraube 24'auch die Funktion der Befestigungsschraube 24 des Haltezapfens 10' gemäß den Figuren 3 und 4 übernehmen, wenn die ursprünglich integrale Verbindung des eigentlichen Zapfenteils mit dem Beschlagteil 12 gewollt oder ungewollt unterbrochen ist. Die Längsbohrung 29 erstreckt sich dabei durch den Beschlagteil 12 hindurch in den Zapfenteil, wobei der den Beschlagteil 12 durchsetzende Abscnitt 29b der Längsbohrung einen Durchmesser hat, der größer als der Gewindeschaft-Durchmesser der Halteschraube 24'ist. D.h .Gewindeeingriff besteht nur zwischen dem innerhalb des Zapfenteils verlaufenden Abschnitt 29a der Längsbohrung 29 und dem Gewindeschaft der Halteschraube 24'. Die Übertragung der bei der Demontage durch Abhebeln des Beschlagteils 12 auftretenden Zugbeanspruchungen vom Beschlagteil 12 in den Zapfenteil 18 erfolgt also über den - zweckmäßig in der gezeigten Weise in einer Ansenkung 29c des Beschlagteils 12 aufgenommenen - Kopf der Halteschraube 24' in deren Gewindeschaft, der seinerseits nur mit dem Abscnitt 29a in Gewindeeingriff steht. Der Übergangsbereich vom Zapfenteil zum Beschlagteil wird dabei von Zugbeanspruchungen weitgehend entlastet.

Anstelle der in den Figuren 5 und 6 gezeigten Halteschraube 24' mit konischem Senkkopf kann auch eine Halteschraube mit zylindrischem Schraubenkopf verwendet werden, wobei dann die Ansenkung 29c zweckmäßig komplementär zylindrisch ausgebildet wird. Soweit die Sicherung des Haltezapfens 10'' gegen Scherbeanspruchungen in Frage steht, kann anstelle der Halteschraube 24' auch ein gewindeloser Metall-Paß- oder -Kerbstift verwendet werden.

## Patentansprüche

1. Befestigungsanordnung eines dübelartigen Haltezapfens (10) aus Kunststoff in einer zugehörigen Bohrung (16), insbesondere zur Befestigung von Möbelbeschlägen an Möbelstücken, mit einem langgestreckten Zapfenteil (18), von dessen äußerer Umfangsfläche eine Anzahl von in Zapfen-Längsrichtung versetzten umlaufenden Ringvorsprüngen mit sich nach außen verjüngendem, jeweils einen schneidenartigen Haltegrat bildenden Dreieck-Querschnitt radial vorspringt, wobei der Außendurchmesser (D) der Ringvorsprünge größer als der Durchmesser der zugehörigen Bohrung (16) ist,
**dadurch gekennzeichnet**,
daß der Zapfenteil (18) über den größeren Teil seiner Längserstreckung einen in bezug auf den Durchmesser (d) der zugehörigen Bohrung (16) wesentlichen kleineren Durchmesser hat,und die umlaufenden Ringvorsprünge als einstückig am Zapfenteil (18) angesetzte ringscheibenförmige, elastisch verformbare Lamellen (20) ausgebildet sind, und
daß die zwischen zwei in Längsrichtung aufeinanderfolgenden Lamellen (20) verbleibenden Abschnitte (18b; 18c; 18d) des Zapfenteils (18) vom bohrungsmündungsseitigen zum bohrungsinneren Ende der Bohrung (16) hin schrittweise einen jeweils kleiner werdenden Durchmesser aufweisen.

2. Befestigungsanordnung nach Anspruch 1, dadurch gekennzeichnet, daß die die Ringvorsprünge bildenden Lamellen (20) nur im äußeren Randbereich den den Haltegrat (22) bildenden Dreieck-Querschnitt aufweisen und im übrigen im unverformten Zustand im wesentlichen ebenflächig ausgebildet sind.

3. Befestigungsanordnung nach Anspruch 1 oder 2, dadurch gekennzeichnet, daß die zwischen jeweils zwei in Längsrichtung aufeinanderfolgenden Lamellen (20) verbleibenden Abschnitte (18b; 18c; 18d) des Zapfenteils (18) mit einer im Querschnitt konkav ausgerundeten Übergangsfläche in die jeweils anschließende Flachseite der benachbarten Lamellen (20) übergehen.

4. Befestigungsanordnung nach einem der Ansprüche 1 bis 3, dadurch gekennzeichnet, daß der über die oberste bohrungsmündungsseitig vorgesehene Lamelle (20) vortretende Endabschnitt (18a) des Zapfenteils (18) einen im Vergleich zu den Durchmessern der übrigen Zapfenabschnitte (18b; 18c; 18d) vergrößerten Durchmesser hat, der nur geringfügig kleiner als der Durchmesser (d) der zugehörigen Befestigungsbohrung (16) ist.

5. Befestigungsanordnung nach einem der Ansprüche 1 bis 4, dadurch gekennzeichnet, daß die an den obersten bohrungsmündungsseitigen Zapfen-Endabschnitt (18a) anschließende Lamelle (20) ein im Vergleich zu den übrigen Lamellen (20) des Haltezapfens (10; 10') verringertes Übermaß gegenüber dem Durchmesser (d) der Befestigungsbohrung (16) aufweist.

6. Befestigungsanordnung nach einem der Ansprüche 1 bis 5 für einen aus Kunststoff hergestellten Möbelbeschlagteil, dadurch gekennzeichnet, daß der Zapfenteil (18) integral am Kunststoff-Bauteil (12) angesetzt ist.

7. Befestigungsanordnung nach einem der Ansprüche 1 bis 5, dadurch gekennzeichnet, daß der Zapfenteil (18) eine bohrungsmündungsseitig offen mündende mittige Längsbohrung (28) aufweist, in welcher der Schaft eines Befestigungsbolzens, vorzugsweise der Gewindeschaft einer Befestigungsschraube (24), befestigbar ist.

8. Befestigungsanordnung nach Anspruch 7, dadurch gekennzeichnet, daß die Längsbohrung (28) sich vom offenen bohrungsmündungsseitigen Ende in Richtung zum bohrungsmündungsabgewandten Ende leicht konisch verjüngt.

9. Befestigungsanordnung nach Anspruch 7 oder 8, dadurch gekennzeichnet, daß die Längsbohrung (28) als vor der bohrungsmündungsabgewandten Stirnfläche des Zapfenteils (18) endende Sackbohrung ausgebildet ist.

10. Befestigungsanordnung nach Anspruch 7 oder 8, dadurch gekennzeichnet, daß die Längsbohrung (28) den Zapfenteil (18) ganz durchsetzt.

11. Befestigungsanordnung nach Anspruch 6, dadurch gekennzeichnet, daß der Zapfenteil (18) und der Kunststoff-Möbelbeschlagteil (12) eine auf der zapfenteilabgewandten Seite des Möbelbeschlagteils (12) offen mündende Längsbohrung (29) aufweisen, in welche der Schaft einer Halteschraube (24') eingeschraubt ist.

12. Befestigungsanordnung nach Anspruch 11, dadurch gekennzeichnet, daß die Längsbohrung (29) in ihrem innerhalb des Zapfenteils (18) verlaufenden Abschnitt (29a) einen lichten Durchmesser, der kleiner als der Außendurchmesser des Gewindeschafts der Halteschraube (24') ist, hat, und daß der innerhalb des Kunststoff-Bauteils (12) verlaufende Abschnitt (29b) der Längsbohrung (29) einen gegenüber dem Außendurchmesser des Gewindeschafts mit Übermaß bemessenen lichten Durchmesser aufweist.

13. Befestigungsanordnung nach Anspruch 11 oder 12, dadurch gekennzeichnet, daß die Längsbohrung (29) mündungsseitig mit einer Ansenkung (29c) versehen ist.

## Claims

1. Fastening arrangement of a dowel-like fastening peg (10) of plastics material in an associated bore (16), particularly for fastening furniture fittings to articles of furniture, with an elongate peg portion (18), radially projecting from whose outer peripheral surface is a number of peripheral annular projections, which are offset in the longitudinal direction of the peg, with an outwardly tapering triangular cross-section defining a respective knife blade-like retaining ridge, whereby the external diameter (D) of the annular projections is greater than the diameter of the associated bore (16), characterised in that the peg portion (18) has a substantially smaller diameter over the major portion of its longitudinal extent with respect to the diameter (d) of the associated bore (16) and the peripheral annular projections are constructed as annular disc-shaped, elastically deformable ribs (20) which are integrally attached to the peg portion (18), and that the sections (18b;18c;18d) of the peg portion (18) remaining between each two adjacent ribs (20) in the longitudinal direction have an incrementally decreasing diameter from the outer to the inner end of the bore (16).

2. Fastening arrangement as claimed in claim 1, characterised in that the ribs (20) constituting the annular projections only have the triangular cross-section defining the retaining ridge (22) in the outer edge region and are otherwise of substantially flat surface construction in the undeformed state.

3. Fastening arrangement as claimed in claim 1 or 2, characterised in that the sections (18b;18c;18d) of the peg portion (18) remaining between each two adjacent ribs (20) in the longitudinal direction merge into the respective adjacent flat surface of the adjacent ribs (20) with a transition surface which is concavely rounded in cross-section.

4. Fastening arrangement as claimed in one of claims 1 to 3, characterised in that the end section (18a) of the peg portion (18), which projects beyond the uppermost rib (20) at the bore mouth end, has an enlarged diameter with respect to the diameters of the other peg sections (18b;18c;18d) which is only slightly smaller than the diameter (d) of the associated fastening bore (16).

5. Fastening arrangement as claimed in one of claims 1 to 4, characterised in that the rib (20), which is adjacent to the uppermost peg end section (18a) at the bore mouth end, has a reduced oversize with respect to the diameter (d) of the fastening bore (16) in comparison to the other ribs (20) on the fastening peg (10;10').

6. Fastening arrangement as claimed in claims 1 to 5 for a furniture fitting manufactured from plastics material, characterised in that the peg portion (18) is integrally attached to the plastics component (12).

7. Fastening arrangement as claimed in one of claims 1 to 5, characterised in that the peg portion (18) has a central longitudinal bore which opens out at the bore mouth end and in which the shaft of a fastening bolt, preferably the threaded shaft of a fastening screw (24), may be fastened.

8. Fastening arrangement as claimed in claim 7, characterised in that the longitudinal bore (28) gently tapers conically from the open end in the direction towards the end remote from the bore mouth.

9. Fastening arrangement as claimed in claim 7 or 8, characterised in that the longitudinal bore (28) is constructed as a blind bore terminating in front of the end surface of the peg portion (18) remote from the bore mouth.

10. Fastening arrangement as claimed in claim 7 or 8, characterised in that the longitudinal bore (28) passes completely through the peg portion (18).

11. Fastening arrangement as claimed in claim 6, characterised in that the peg portion (18) and the plastic furniture fitting (12) have an open longitudinal bore (29) on the side of the furniture fitting (12) directed away from the peg portion, into which bore the shaft of a fastening screw (24') is screwed.

12. Fastening arrangement as claimed in claim 11, characterised in that the longitudinal bore (29) has a free diameter in its section (29a) extending within the peg portion (18) which is smaller than the external diameter of the threaded shaft of the fastening screw (24') and that the section (21b) of the longitudinal bore (29) which extends within the plastic component (12) has an oversize diameter with respect to the external diameter of the threaded shaft.

13. Fastening arrangement as claimed in claim 11 or 12, characterised in that the longitudinal bore (29) is provided at the mouth end with a countersink (29c).

## Revendications

1. Dispositif de fixation d'un tenon du genre goujon (10) en matière plastique dans un trou correspondant (16), en particulier pour la fixation de ferrures à des meubles, comprenant une partie tenon allongée (18) de la surface périphérique extérieure de laquelle font saillie radialement un certain nombre de saillies annulaires faisant le tour espacées dans la direction longitudinale du tenon et ayant une section triangulaire s'amincissant vers l'extérieur et formant une arête de retenue du genre tranchant, le diamètre extérieur (D) de ces saillies annulaires étant supérieur au diamètre du trou correspondant (16),
caractérisé par le fait
que la partie tenon (18) a, sur la majeure partie de son étendue longitudinale, un diamètre nettement inférieur au diamètre (d) du trou correspondant (16), et les saillies annulaires faisant le tour sont des lamelles en forme de disque déformables élastiquement (20) qui font corps avec la partie tenon (18), et
que les tronçons (18b ; 18c ; 18d) de la partie tenon (18) restant entre deux lamelles (20) se suivant dans la direction longitudinale ont, de l'extrémité côté orifice vers l'extrémité intérieure du trou (16), un diamètre de plus en plus petit.

2. Dispositif de fixation selon la revendication 1, caractérisé par le fait que les lamelles (20) formant les saillies annulaires ont seulement dans la zone de bord extérieure la section triangulaire formant l'arête de retenue (22) et sont ailleurs, à l'état non déformé, à faces sensiblement planes.

3. Dispositif de fixation selon l'une des revendications 1 et 2, caractérisé par le fait que les tronçons (18b ; 18c ; 18d) de la partie tenon (18) restant entre deux lamelles (20) se suivant dans la direction longitudinale se raccordent à la face plane contiguë des lamelles (20) voisines par une surface de section concave.

4. Dispositif de fixation selon l'une des revendications 1 à 3, caractérisé par le fait que le tronçon d'extrémité (18a) de la partie tenon (18) s'avançant au-dessus de la lamelle (20) supérieure prévue du côté de l'orifice du trou (16) a un diamètre supérieur aux diamètres des autres tronçons (18b ; 18c ; 18d) du tenon et légèrement inférieur au diamètre (d) du trou de fixation correspondant (16).

5. Dispositif de fixation selon l'une des revendications 1 à 4, caractérisé par le fait que la lamelle (20) contiguë au tronçon d'extrémité supérieur côté orifice du trou (18a) a, par rapport au diamètre (d) du trou de fixation (16), une surdimension inférieure à celle des autres lamelles (20) du tenon (10 ; 10').

6. Dispositif de fixation selon l'une des revendications 1 à 5 pour une partie ferrure de meuble en matière plastique, caractérisé par le fait que la partie tenon (18) fait corps avec l'élément en matière plastique (12).

7. Dispositif de fixation selon l'une des revendications 1 à 5, caractérisé par le fait que la partie tenon (18) présente un trou longitudinal central (28) ouvert du côté de l'orifice du trou (16) et dans lequel peut être fixée la tige d'un élément de fixation allongé, de préférence la tige filetée d'une vis de fixation (24).

8. Dispositif de fixation selon la revendication 7, caractérisé par le fait que le trou longitudinal (28) se rétrécit légèrement, coniquement, de son extrémité ouverte côté orifice du trou (16) vers son extrémité opposée à l'orifice du trou (16).

9. Dispositif de fixation selon l'une des revendications 7 et 8, caractérisé par le fait que le trou longitudinal (28) est un trou borgne qui se termine avant la face frontale de la partie tenon (18) opposée à l'orifice du trou (16).

10. Dispositif de fixation selon l'une des revendications 7 et 8, caractérisé par le fait que le trou longitudinal (28) traverse entièrement la partie tenon (18).

11. Dispositif de fixation selon la revendication 6, caractérisé par le fait que la partie tenon (18) et la partie ferrure de meuble en matière plastique (12) présentent un trou longitudinal (29) ouvert sur le côté de la partie ferrure de meuble (12) opposé à la partie tenon et dans lequel est vissée la tige d'une vis de fixation (24').

12. Dispositif de fixation selon la revendication 11, caractérisé par le fait que le trou longitudinal (29) a, dans sa partie (29a) s'étendant à l'intérieur de la partie tenon (18), un diamètre inférieur au diamètre extérieur de la tige filetée de la vis de fixation (24'), et que la partie (29b) du trou longitudinal (29) s'étendant à l'intérieur de l'élément en matière plastique (12) a un diamètre supérieur au diamètre extérieur de ladite tige filetée.

13. Dispositif de fixation selon l'une des revendications 11 et 12, caractérisé par le fait que le trou longitudinal (29) est pourvu d'une fraisure conique (29c) du côté de son orifice.
